# EUROPÄISCHE PATENTSCHRIFT

(11) **EP 3 711 931 B1**
(45) Veröffentlichungstag und Bekanntmachung des Hinweises auf die Patenterteilung: **03.08.2022**
(21) Anmeldenummer: 20159508.9
(22) Anmeldetag: 26.02.2020
(51) Int. Cl.: B29C 65/20, B29C 65/06, B29C 65/26, B29C 65/30, B29C 65/04, B29C 65/08, B29C 65/10

(54) **EINRICHTUNG UND VERFAHREN ZUM THERMISCHEN FÜGEN VON ZWEI WERKSTÜCKEN**
DEVICE AND METHOD FOR THERMALLY JOINING TWO WORKPIECES
DISPOSITIF ET PROCÉDÉ D'ASSEMBLAGE THERMIQUE DE DEUX PIÈCES

(30) Priorität: 20.03.2019 DE 102019107189
(43) Veröffentlichungstag der Anmeldung: 23.09.2020
(73) Patentinhaber: Wegener International GmbH, 52249 Eschweiler (DE)
(72) Erfinder: DIETRICH, Michael, 52224 Stolberg (DE); BARTH, Eric, 09125 Chemnitz (DE); SCHEFFER, Sten, 02627 Radibor OT Luppa (DE)
(74) Vertreter: Paul & Albrecht Patentanwälte PartG mbB

(56) Entgegenhaltungen:
- DE-C1- 19 738 100
- US-A- 4 060 190
- US-A1- 2008 202 669
- US-A1- 2011 094 653

## Beschreibung

Die Erfindung betrifft eine Einrichtung zum thermischen Fügen von zwei Werkstücken, insbesondere Kunststoffwerkstücken, an zueinander weisenden, insbesondere parallelen Fügeflächen im Stumpfstoß, mit einer ersten Werkstückaufnahme zur Aufnahme eines ersten Werkstücks und einer dieser gegenüberliegenden zweiten Werkstückaufnahme zur Aufnahme eines zweiten Werkstücks, wobei die beiden Werkstückaufnahmen relativ zueinander zum Zusammen- und Auseinanderbewegen der Werkstücke unter Definition einer Bewegungsrichtung bewegbar sind und geeignet sind, zum Erwärmen und/oder Fügen der Werkstücke eine Druckkraft in Bewegungsrichtung aufzubringen, wobei die Einrichtung ferner ein thermographisches Aufzeichnungsgerät (15) zur Erfassung der oberflächennahen Werkstücktemperatur in der Umgebung der Fügeflächen umfasst.

Die Erfindung betrifft ferner ein Verfahren zum Fügen von zwei Werkstücken, insbesondere Kunststoffwerkstücken.

Einrichtungen zum thermischen Fügen von zwei Werkstücken, insbesondere Kunststoffwerkstücken, sind in verschiedenen Ausführungsformen bekannt und finden weite Verbreitung in der Industrie. Eine mögliche Ausführungsform einer derartigen Einrichtung bilden Heizelementstumpfschweißmaschinen, die üblicherweise zwei Werkstückaufnahmen für die miteinander zu verbindenden Werkstücke und ein zwischen den Werkstücken positionierbares Heizelement aufweisen. Das Heizelement ist aus dem Bereich zwischen den miteinander zu verbindenden Werkstücken herausfahrbar. Sollen zwei Werkstücke miteinander verbunden werden, so werden diese in die Werkstückaufnahmen eingesetzt und zunächst gegen das zwischen den Werkstücken positionierte Heizelement gefahren. In einem ersten Schritt werden die Fügeflächen mit einer hohen Kraft gegen das erhitzte Heizelement gedrückt und aufgeheizt, wobei Unebenheiten der Fügeflächen ausgeglichen werden. Man spricht in diesem Zusammenhang von der Angleichphase. In der darauf folgenden Aufheizphase werden die Fügeflächen mit einem geringeren Druck an das Heizelement gedrückt und über eine definierte Dauer aufgeheizt. Anschließend wird das Heizelement von den Fügeflächen gelöst und werden die Fügeflächen unter Aufbringung einer Fügekraft gegeneinander gefahren, wodurch die beiden Werkstücke stoffschlüssig miteinander verbunden werden. Üblicherweise bleiben die gefügten Teile bis zur völligen Abkühlung unter Fügedruck in der Maschine, um durch Temperaturveränderung bedingte Verformungen zu vermeiden. Ein derartiges Schweißverfahren wird beispielsweise durch das DVS-Merkblatt 2201 Teil 1 für Rohre aus Polyethylen vorgegeben.

Wenngleich sich das Verfahren des Heizelementstumpfschweißens zum Fügen von Kunststoffwerkstücken durchaus bewährt hat, so tritt bei hohen Anforderungen an die Fügeverbindung teilweise das Problem auf, dass die Vorgabe einer festen Dauer der Aufheizphase keine hinreichend reproduzierbare qualitativ hochwertige Fügeverbindung ermöglicht, insbesondere beim Vorhandensein von Unregelmäßigkeiten im Werkstoff. Eine mögliche Abhilfe dazu wird in der DE 10 2012 222 021 A1 vorgeschlagen, bei der am Heizelement zwei Messvorrichtungen so angebracht sind, dass sie sich in der Angleich- und Aufheizphase zwischen dem Heizelement und jeweils einer Fügefläche der zu verbindenden Werkstücke befinden. In diesen Messeinrichtungen sind jeweils mehrere Thermoelemente angeordnet und so miteinander verschaltet, dass sie den vom Heizelement auf die zu verbindenden Werkstücke übergehenden Wärmestrom messen können. Die kontinuierliche Erfassung der vom Heizelement auf die zu verbindenden Werkstücke übertragenen Wärmemenge ermöglicht es somit indirekt, Rückschlüsse auf die an den Fügeflächen vorhandene Temperatur zu ziehen und beim Unterschreiten eines bestimmten Wärmestroms die Aufheizphase zu beenden und die Fügephase einzuleiten.

Obwohl der offenbarte Aufbau eine Möglichkeit darstellt, qualitativ deutlich höherwertigere Fügeverbindungen als bei der Vorgabe eines definierten Zeitraums für die Angleich- und Aufheizphase zu erzielen, so basiert die beschriebene Vorgehensweise lediglich auf einer indirekten Messung des Zustands der Werkstücke im Bereich der Fügeflächen und erfordert einen hohen messtechnischen und steuerungstechnischen Aufwand, da aus dem Verlauf des Wärmestroms, dessen Messung über eine komplizierte Verschaltung von Thermoelementen erfolgt, der Zeitpunkt der Beendigung der Aufheizphase bestimmt werden muss.

Eine Einrichtung zum thermischen Fügen von zwei Werkstücken der Eingangs genannten Art ist aus der US 2008/0202669 A1 bekannt. Diese dient zur Verbindung von zwei Plastikrohren, deren Enden unter Druck verschweißt werden. Die bekannte Einrichtung umfasst zwei Werkstückaufnahmen zur Aufnahmeaufnahme der zu verbindenden Werkstücke, die unter Definition einer Bewegungsrichtung aufeinander zu und voneinander weg bewegbar und geeignet sind, zum Erwärmen und Fügen der Werkstücke eine Druckkraft in Bewegungsrichtung aufzubringen. Ferner umfasst die Einrichtung ein thermographisches Aufzeichnungsgerät, um die oberflächennahe Werkstücktemperatur in der Umgebung der Fügeflächen zu erfassen.

Weitere Schweißeinrichtungen sind aus der US 2011/0094653 A1, der DE 197 38 100 C1 und der US 4,060,190 A bekannt. Diese besitzen ebenfalls Werkstückaufnahmen zur Aufnahme zu verbindenden Werkstücke, die aufeinander zu und voneinander weg bewegt werden können, um die zu verbindenden Werkstücke zum Fügen der selben in Kontakt miteinander zu bringen.

Eine Einrichtung zum thermischen Fügen von zwei Werkstücken, insbesondere Kunststoffwerkstücken, kann auch als Reibschweißmaschine ausgebildet sein. Eine gängige Reibschweißmaschine umfasst zwei Werkstückaufnahmen, die in Längsrichtung quer zu den Fügeflächen gegeneinander verfahrbar sind und die es ermöglichen, auf die zu fügenden Werkstücke bei Anlage der Fügeflächen aneinander eine definierte Druckkraft aufzubringen. Eine Werkstückaufnahme ist dabei üblicherweise um eine Achse senkrecht zu den Fügeflächen drehbar gelagert, so dass es möglich ist, die zum Fügen erforderliche Wärme durch eine Rotationsbewegung der Werkstücke gegeneinander zu erzeugen. Anders als beim Heizelementstumpfschweißen ist kein Heizelement vorgesehen, welches zwischen den Fügeflächen der zu verbindenden Werkstücke positioniert wird.

Sollen zwei Werkstücke mittels Reibschweißen verbunden werden, so werden die Werkstücke an ihren Fügeflächen gegeneinander gefahren und in axialer Richtung eine Druckkraft auf die Fügeflächen aufgebracht. Eines der beiden Werkstücke wird anschließend in Rotation versetzt, so dass infolge der Relativbewegung der beiden Werkstücke zueinander Reibungswärme an den Fügeflächen entsteht und die beiden Werkstücke aufgeheizt werden. Zum Fügen wird nach einem definierten Zeitraum eine höhere Druckkraft (Stauchkraft) aufgebracht und das drehende Werkstück durch den Reibwiderstand oder durch eine zusätzliche Bremse angehalten. Während der sich anschließenden Abkühlung wird üblicherweise die Stauchkraft aufrechterhalten. Verschiedene Prozessablaufvarianten des Reibschweißens werden beispielsweise im DVS-Merkblatt 2909 dargestellt. So kann beispielsweise die Werkstückaufnahme für das drehende Werkstück kontinuierlich mit einem Elektromotor angetrieben werden oder mit einer Schwungmasse versehen sein, die nach Erreichen einer bestimmten Drehzahl aufgrund ihrer Trägheit den Antrieb des drehenden Werkstücks während des Aufheizens der Werkstücke sicherstellt.

Auch beim Reibschweißen handelt es sich um ein weitgehend bewährtes Verfahren, allerdings hat es sich ebenfalls teilweise als nachteilig herausgestellt, dass die Steuerung des Aufheizens der Werkstücke im Bereich ihrer Fügeflächen über eine zuvor definierte und einzustellende Zeitspanne erfolgt. Für bestimmte Anwendungen, die eine besonders hohe Qualität der Fügeverbindungen erfordern, kann die Steuerung der Beendigung des Aufwärmens über eine zuvor definierte Zeitspanne möglicherweise nicht hinreichend genau sein, insbesondere vor dem Hintergrund von möglichen Unregelmäßigkeiten bei den Werkstoffeigenschaften, die bei diesem Verfahrensablauf nicht berücksichtigt werden können.

Aufgabe der vorliegenden Erfindung ist es somit, die zuvor genannten Nachteile von bekannten Einrichtungen zum thermischen Fügen von zwei Werkstücken, insbesondere Kunststoffwerkstücken zu vermeiden und eine Einrichtung und ein Verfahren zum Fügen von Werkstücken bereitzustellen, die die Herstellung einer qualitativ hochwertigen Fügeverbindung selbst bei hohen Ungenauigkeiten der Werkstückeigenschaften bei jedem Fügevorgang individuell sicherstellen.

Die Aufgabe wird bei einer Einrichtung der eingangs genannten Art dadurch gelöst, dass das thermographische Aufzeichnungsgerät mit einer Auswerteeinheit zur Ermittlung von Geometrieparametern einer Temperaturzone, insbesondere einer Schmelzzone, vorzugsweise derer sich senkrecht zu den Fügeflächen erstreckenden Breite, ausgehend von den erfassten Temperaturdaten des Aufzeichnungsgeräts verbunden ist.

Der Erfindung liegt somit die Überlegung zugrunde, mittels eines thermographischen Aufzeichnungsgeräts die Temperatur in der Umgebung der Fügeflächen unmittelbar zu messen und mittels einer Auswerteeinheit, die auf die von dem thermographischen Aufzeichnungsgerät erfassten Temperaturdaten zurückgreift, Geometrieparameter einer Temperaturzone zu ermitteln. Als Temperaturzone wird derjenige Bereich der Oberfläche des Werkstücks verstanden, in dem eine bestimmte, zuvor definierte Temperatur überschritten wird. Insbesondere kann es sich dabei um die Schmelztemperatur handeln, so dass die beschriebene Temperaturzone dem Bereich entspricht, in dem das Werkstück aufgeschmolzen ist. Von besonderer Relevanz ist dabei die Breite dieser Temperaturzone, die sich senkrecht zu den Fügeflächen erstreckt. Die erfindungsgemäße Maschine ermöglicht somit eine direkte Messung der Werkstücktemperatur im Bereich der Fügeflächen, so dass kein messtechnisch aufwendiger Umweg über die Messung eines Wärmestroms notwendig ist. Ferner vermeidet die direkte Erfassung der Werkstücktemperatur das Risiko, durch eine zu hohe Temperatur den Werkstoff zu schädigen.

Bei einer Ausführungsform der Erfindung ist das thermographische Aufzeichnungsgerät insbesondere ortsfest außerhalb des Bewegungsbereichs der Werkstückaufnahmen positioniert. Dadurch wird sichergestellt, dass das thermographische Aufzeichnungsgerät so angeordnet ist, dass ein Bereich der Werkstücke in der Nähe der Fügeflächen erfasst werden kann. Eine ortsfeste Positionierung ist vor allem erforderlich, um bei einer Serienfertigung über einen längeren Zeitraum bei einer Vielzahl von Fügevorgängen stets die gleichen Messbedingungen zu garantieren.

Bei dem thermographischen Aufzeichnungsgerät kann es sich um eine Infrarot (IR)-Kamera insbesondere zur Erfassung eines Spektralbereichs von 7,5 bis 13 µm handeln. Eine derartige Kamera ist handelsüblich und geeignet, insbesondere bei Kunststoffwerkstücken den relevanten Temperaturbereich zu erfassen.

In bevorzugter Ausgestaltung erfasst das thermographische Aufzeichnungsgerät die Werkstücktemperatur mit einer Bildfrequenz zwischen 10 und 250 Hz, insbesondere zwischen 50 und 200 Hz und vorzugsweise zwischen 100 und 150 Hz. Für das Erzielen einer qualitativ hochwertigen Fügeverbindung ist es erforderlich, mit einer hohen Bildfrequenz die Werkstücktemperatur zu erfassen, um auch kurze Fügeprozesse zuverlässig und mit einer hohen Qualität durchführen zu können.

Vorzugsweise umfasst das thermographische Aufzeichnungsgerät ein Schutzgehäuse der Schutzklasse IP 67 oder höher zum Schutz vor Beschädigung des Aufzeichnungsgeräts durch eintretenden Staub oder Feuchtigkeit.

In weiterer Ausgestaltung der Erfindung kann die Einrichtung eine Steuereinheit zum Steuern des Schweißprozesses umfassen, welche mit der Auswerteeinheit verbunden ist und geeignet ist, einen Sollwert einer Größe, insbesondere der Breite einer Temperaturzone, mit einem von der Auswerteeinheit ermittelten Istwert abzugleichen. Hintergrund dieser Ausgestaltung ist, dass das Aufheizen des Werkstücks dann beendet werden soll, wenn die erfasste Breite der Temperaturzone, insbesondere der Schmelzzone einen vorgegebenen Sollwert überschreitet.

Vorzugsweise ist die Steuereinheit dabei als speicherprogrammierbare Steuerung ausgebildet und/oder umfasst eine Eingabemöglichkeit für einen Sollwert, insbesondere für einen Sollwert einer Breite einer Temperaturzone, vorzugsweise einer Schmelzzone, und/oder einer Temperatur. Die Eingabemöglichkeit kann in bekannter Weise als berührungsempfindliches Display oder als Tastatur, jedoch auch als Drehknopf oder in anderer Weise ausgebildet sein.

In weiterer Ausgestaltung der Erfindung ist mindestens eine Werkstückaufnahme bewegbar an einem Gestell angeordnet, mittels eines elektrischen und/oder eines pneumatischen und/oder hydraulischen Linearantriebs an diesem linear bewegbar und bei zusammengeführten Werkstücken mit einer Druckkraft beaufschlagbar.

In an sich bekannter Weise kann die mindestens eine Werkstückaufnahme mit der Kolbenstange eines hydraulisch oder pneumatisch wirkenden Zylinders verbunden sein, wobei das Gehäuse des Zylinders an dem Maschinengestell befestigt ist.

Die mindestens eine Werkstückaufnahme kann des Weiteren auf einem an dem Gestell befestigten Führungssystem, insbesondere Schienensystem angeordnet sein.

Des Weiteren kann die Einrichtung einen oder mehrere Kraftsensoren zur Messung der auf die Werkstücke aufgebrachten Druckkräfte und/oder einen oder mehrere Wegsensoren zur Bestimmung der Position der Werkstückaufnahmen relativ zueinander aufweisen.

In einer bevorzugten Ausgestaltung der Einrichtung ist diese als Heizelementstumpfschweißmaschine ausgebildet und weist ein Heizelement zum Aufheizen der Werkstücke im Bereich ihrer Fügeflächen durch direkten Kontakt mit diesen auf, welches quer, insbesondere senkrecht zur Bewegungsrichtung der Werkstückaufnahmen relativ zueinander zwischen einer Warteposition, in welcher sich das Heizelement außerhalb des Bereichs der Werkstückaufnahmen befindet, und einer Heizposition, in der sich das Heizelement zwischen den Werkstückaufnahmen befindet und sich über die gesamte Querschnittsfläche der zu verbindenden Werkstücke erstreckt, bewegbar ist, und wobei die Werkstücke mittels geeigneter Spanneinrichtungen fest in den Werkstückaufnahmen fixiert werden.

Bei dieser Ausführungsform erfolgt ein Aufheizen der Werkstücke im Bereich ihrer Fügeflächen durch ein Heizelement, das bewegbar und aus dem Bereich zwischen den Werkstücken herausfahrbar ist, um im Anschluss an das Aufheizen das Fügen der zu verbindenden Teile zu ermöglichen.

Die Heizelementstumpfschweißmaschine umfasst bevorzugt Spanneinrichtungen, die die Werkstücke in den Werkstückaufnahmen fixieren. Dabei kann es sich um übliche Klemmvorrichtungen handeln, die die Werkstücke in erster Linie kraftschlüssig in den Werkstückeinrichtungen fixieren. Alternativ ist es auch denkbar, gerade bei größeren Serienfertigungen, auch Spanneinrichtungen mit Formschlussselementen vorzusehen.

In weiterer Ausgestaltung der Erfindung weist jede der beiden Werkstückaufnahmen mindestens eine Spanneinrichtung zum Fixieren der Werkstücke auf.

In bevorzugter Weise ist das Heizelement plattenförmig ausgebildet und besteht überwiegend aus einem metallischen Werkstoff, insbesondere einem Stahlwerkstoff, und vorzugsweise einem korrosionsbeständigen Edelstahl besteht und/oder weist eine Beschichtung auf. Dabei kann es sich sowohl um eine korrosionsbeständige Beschichtung handeln, als auch um eine Beschichtung, die den Wärmeübergang auf die zu verbindenden Werkstücke beeinflusst.

Das Heizelement kann mittels eines durch innere Kanäle strömenden Heizfluides oder mittels elektrischer Widerstandsheizelemente beheizbar sein. Als Heizfluid kommt beispielsweise Wasserdampf infrage, jedoch gleichermaßen jedes andere für den erforderlichen, vom Werkstoff der zu fügenden Werkstücke abhängigen Temperaturbereich geeignete Fluid.

In einer alternativen Ausgestaltung ist die Einrichtung als Reibschweißmaschine insbesondere zum Fügen von zwei Werkstücken mit rotationssymmetrischen Fügeflächen ausgebildet, wobei vorgesehen ist, die zum Fügen erforderliche Wärme durch relative Bewegung der beiden miteinander in Kontakt stehenden Werkstücke zueinander in den Fügebereich einzubringen.

Die Werkstückaufnahmen sind dazu relativ zueinander um die Bewegungsrichtung der Werkstückaufnahmen drehbar ausgebildet.

Vorzugsweise ist genau eine der beiden Werkstückaufnahmen um die Bewegungsrichtung der Werkstückaufnahmen zueinander drehbar gelagert und die Maschine umfasst ferner eine Antriebseinheit, welche die drehbar gelagerte Werkstückaufnahme in eine Drehbewegung versetzen kann. Die Lagerung kann dabei vorzugsweise aufgrund der auftretenden Kräfte in axialer Richtung mittels einer angestellten Lagerung unter Verwendung von Wälzlagern, beispielsweise Kegelrollenlagern oder Schrägkugellagern in X- oder O-Anordnung erfolgen. Die Wälzlager können in einem Lagergehäuse angeordnet sein, welches an einem Maschinengestell befestigt ist.

Ferner kann die Maschine eine Schwungmasse umfassen, die drehfest mit der drehbaren Werkstückaufnahme verbunden ist.

In bevorzugter Ausgestaltung kann eine der beiden Werkstückaufnahmen linear unbeweglich angeordnet sein, wobei es sich dabei vorzugsweise um die drehbar gelagerte Werkstückaufnahme handelt.

Neben einer Heizelementstumpfschweißmaschine oder einer Reibschweißmaschine kann eine erfindungsgemäße Einrichtung auch als Warmgasschweißmaschine, als Hochfrequenzschweißmaschine oder als Ultraschallschweißmaschine ausgebildet sein.

Die der Erfindung zugrunde liegende Aufgabe wird ferner durch ein Verfahren zum Fügen, insbesondere zum thermischen Fügen, von zwei Werkstücken, insbesondere von Kunststoffwerkstücken gelöst, welches die folgenden Schritte umfasst:
Bereitstellen einer Einrichtung zum Fügen von zwei Werkstücken wie zuvor beschrieben;
Einsetzen eines ersten Werkstücks in die erste Werkstückaufnahme;
Einsetzen eines zweiten Werkstücks in die zweite Werkstückaufnahme;
Durchführung einer Aufheizphase, in welcher
   die Werkstücke im Bereich ihrer Fügeflächen aufgeheizt werden,
   das Aufzeichnungsgerät den Temperaturverlauf der Werkstücke in der Nähe der Fügeflächen kontinuierlich thermographisch erfasst,
   die Auswerteeinheit auf Basis der erfassten Daten Geometrieparameter einer Temperaturzone ermittelt, in welcher die Werkstücktemperatur einen Sollwert überschreitet, und
   bei Erreichen vorgegebener Geometrieparameter der Temperaturzone die Aufheizphase beendet wird;
Durchführung einer Fügephase, bei der die Werkstücke unter Einwirkung einer Fügekraft stoffschlüssig miteinander verbunden werden.

Dem erfindungsgemäßen Verfahren liegt die Überlegung zugrunde, während der Aufheizphase die Werkstücktemperatur im Bereich der Fügeflächen kontinuierlich zu überwachen und permanent die geometrischen Abmessungen einer Temperaturzone zu ermitteln. Sobald die Temperaturzone vorgegebene Abmessungen, beispielsweise eine bestimmte Breite erreicht, wird die Aufheizphase beendet und die Fügephase eingeleitet. Der Zeitpunkt der Beendigung der Aufheizphase ergibt sich somit nicht mehr aus einer zuvor eingestellten Dauer, sondern aus einer unmittelbaren Messung des Temperaturverlaufs der beiden Werkstücke im Bereich ihrer Fügefläche. Dadurch können beispielsweise werkstoffbedingte Ungenauigkeiten und Unregelmäßigkeiten bei der Steuerung des Schweißprozesses flexibel berücksichtigt werden, so dass trotz dieser Ungenauigkeiten qualitativ äußerst hochwertige Fügeverbindungen hergestellt werden können.

Vorzugsweise erfasst das Aufzeichnungsgerät die Temperatur der Werkstückoberflächen kontinuierlich über eine Fläche im Bereich der Fügeflächen. Das bedeutet, dass nicht lediglich punktuell oder linienförmig der Temperaturverlauf über den Werkstückoberflächen ermittelt wird, sondern die Temperatur über eine Fläche erfasst wird.

In weiterer Ausgestaltung errechnet die Auswerteeinheit eine durchschnittliche Breite der Temperaturzone, in welcher die erfasste Temperatur oberhalb des Temperatursollwerts liegt. Somit ist vorgesehen, dass die Auswerteeinheit eine durchschnittliche Breite über der von ihr ausgewerteten Fläche ermittelt. Die durchschnittliche Breite kann dabei errechnet werden, indem an mehreren Stellen in Längsrichtung der Naht die lokale Breite errechnet wird und ein arithmetischer oder geometrischer Durchschnittswert bestimmt wird.

Alternativ ist es jedoch auch denkbar, dass die Auswerteeinheit lediglich entlang einer quer, insbesondere senkrecht zu den Fügeflächen verlaufenden Messlinie die Breite der Temperaturzone ermittelt. In diesem Fall wird kein Durchschnittswert aus mehreren Breitenwerten ermittelt, sondern auf der an sich flächenmäßigen Aufnahme des Aufzeichnungsgerätes nur an einer Stelle die Breite gemessen, über welcher die erfasste Temperatur oberhalb des Temperatursollwerts liegt.

In bevorzugter Weise wird die Aufheizphase beim Erreichen einer vorgegebenen Sollwerts der Breite der Temperaturzone beendet.

Ferner kann der Temperaturverlauf der Werkstücke des Weiteren während der Fügephase überwacht werden und bei Unterschreiten eines bestimmten Temperaturwertes kann die Fügephase beendet werden. Eine solche Temperaturüberwachung während der Fügephase ist vorteilhaft, da bei einem zu heißen Werkstück während einer Abkühlung außerhalb der Werkstückaufnahmen ohne die aufgebrachte Fügekraft Verformungen auftreten können.

Bei dem Verfahren kann es sich um ein Verfahren zum Heizelementstumpfschweißen handeln, zu dessen Durchführung eine als Heizelementstumpfschweißmaschine ausgebildete Einrichtung wie zuvor beschrieben bereitgestellt wird. In der Aufheizphase wird das Heizelement erhitzt und zwischen den Werkstücken positioniert. Die Werkstücke werden mit einer definierten Aufheizkraft gegen das Heizelement gedrückt. Zur Beendigung der Aufheizphase werden die Werkstücke auseinandergefahren und das Heizelement wird in seine Warteposition bewegt, bevor in der anschließenden Fügephase die Werkstücke zusammengefahren und unter Einwirkung einer Fügekraft für eine bestimmte Dauer gegeneinander gedrückt werden.

In bevorzugter Ausgestaltung des Verfahrens zum Heizelementstumpfschweißen findet in an sich bekannter Weise vor der Aufheizphase eine Angleichphase zur Beseitigung von Unebenheiten der Fügeflächen statt, in der das Heizelement zwischen den Werkstücken positioniert ist und die Werkstücke mit einer Druckkraft gegeneinander gedrückt werden, die vorzugsweise oberhalb der Aufheizkraft liegt. Bei dieser Angleichphase geht es nicht darum, das Werkstück bereits im Bereich der Fügeflächen vollständig zu erwärmen, sondern lediglich Unebenheiten, die sich bei der Nahtvorbereitung ergeben können, vor dem Aufheizen und dem anschließenden Fügen auszugleichen, bzw. einzuebnen. Dies ist erforderlich, um in der späteren Aufheizphase gleichmäßig die Wärme flächig in die Werkstücke einbringen zu können. Die Notwendigkeit einer hohen Druckkraft während der Angleichphase ergibt sich daraus, dass die Werkstücke noch eine geringere Temperatur aufweisen und die notwendige plastische Verformung zur Beseitigung von Unebenheiten der Fügeflächen eine höhere Druckkraft erfordert.

Alternativ kann es sich um ein Verfahren zum Reibschweißen handeln, zu dessen Durchführung eine als Reibschweißmaschine ausgebildete Einrichtung wie zuvor beschrieben bereitgestellt wird. In der Aufheizphase werden in an sich bekannter Weise die an den Fügeflächen aneinander anliegenden Werkstücke zum Aufheizen unter Einwirkung einer definierten Reibkraft relativ zueinander bewegt. In der anschließenden Fügephase werden die Werkstücke über einen bestimmten Zeitraum mit einer definierten Fügekraft gegeneinander gedrückt, wobei die Relativbewegung der Werkstücke zueinander zum Stillstand kommt.

In bevorzugter Ausgestaltung des Verfahrens zum Reibschweißen ist die während der Fügephase wirkende Fügekraft höher ist als die während der Aufheizphase wirkende Reibkraft.

Das Verfahren, mittels eines thermographischen Aufzeichnungsgeräts die Werkstücktemperatur während einer Aufheizphase kontinuierlich zu erfassen, mittels einer Auswerteeinheit die Breite einer Temperaturzone zu ermitteln und bei Erreichen eines Sollwerts die Aufheizphase zu beenden, ist nicht auf die Anwendung in Verbindung mit dem Heizelementstumpfschweißen oder dem Reibschweißen beschränkt. In gleicher Weise ist es denkbar, das erfindungsgemäße Verfahren in Verbindung mit anderen Schweißverfahren, insbesondere solchen zum Fügen von Kunststoffwerkstücken zu verwenden, wie beispielsweise dem Warmgasschweißen, dem Hochfrequenzschweißen oder dem Ultraschallschweißen.

Hinsichtlich der weiteren Ausgestaltung der Erfindung wird auch auf die Unteransprüche sowie auf die nachfolgende Beschreibung eines Ausführungsbeispiels unter Bezugnahme auf die beiliegende Zeichnung verwiesen. In der Zeichnung zeigt:
- Figur 1: eine erfindungsgemäße Einrichtung zum Heizelementstumpfschweißen in dreidimensionaler Darstellung;
- Figur 2: einen Temperaturverlauf im Bereich der Fügeflächen bei einem erfindungsgemäßen Verfahren in einem Diagramm;
- Figur 3: eine erfindungsgemäße Einrichtung zum Reibschweißen in schematischer Seitenansicht.

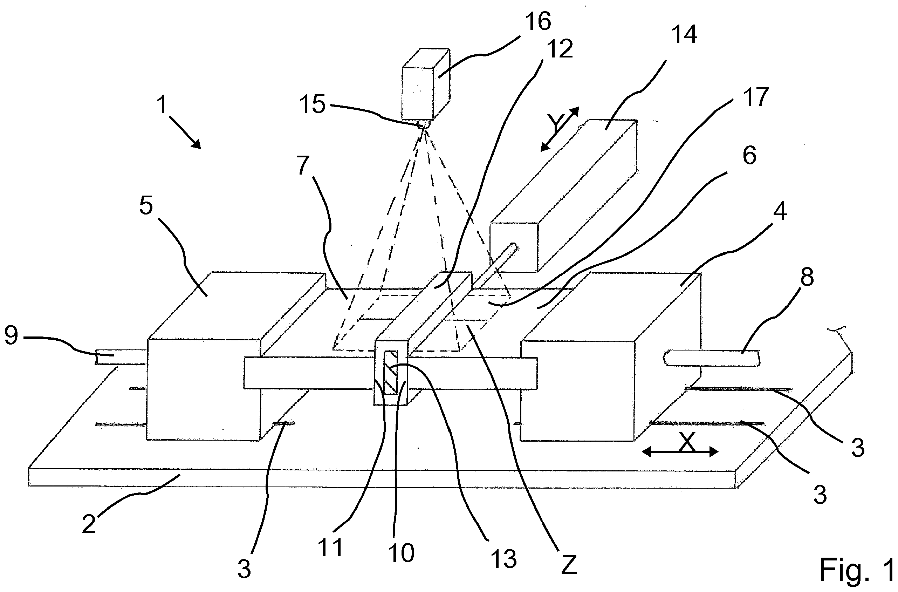

In Figur 1 ist eine als Heizelementstumpfschweißmaschine 1 ausgebildete Einrichtung zum thermischen Fügen von zwei Werkstücken gemäß der vorliegenden Erfindung dargestellt. Diese umfasst ein auf einem Maschinengestell 2 angeordnetes Schienensystem 3, an dem zwei geradlinig entlang einer Bewegungsrichtung X bewegbare Werkstückaufnahmen 4, 5 gehalten sind. Die erste Werkstückaufnahme 4 dient der Aufnahme eines ersten Werkstücks 6, die dieser gegenüber liegende zweite Werkstückaufnahme 5 der Aufnahme eines zweiten Werkstücks 7. Die Werkstücke 6, 7 sind dabei mittels geeigneter, nicht dargestellter Spannvorrichtungen fest in den Werkstückaufnahmen 4, 5 fixiert.

Zum Zusammen- und Auseinanderbewegen der Werkstücke 6, 7 ist jede der beiden Werkstückaufnahmen 4, 5 mit einer Kolbenstange 8, 9 von nicht dargestellten Hydraulikzylindern verbunden, deren Gehäuse an dem Maschinengestell 2 fixiert sind. Dadurch kann beim Aufheizen und/oder Fügen der Werkstücke 6, 7 zusätzlich eine Druckkraft in Bewegungsrichtung X auf die zueinander weisenden und parallel zueinander angeordneten Fügeflächen 10, 11 aufgebracht werden.

Zwischen den beiden Werkstücken 6, 7 ist ein plattenförmiges Heizelement 12 in seiner Heizposition zum Aufheizen der Werkstücke 6, 7 angeordnet. Dieses liegt flächig an den Fügeflächen 10, 11 an und besteht überwiegend aus einem korrosionsbeständigen Edelstahl. Des Weiteren weist das Heizelement 12 eine Beschichtung auf, welche den Wärmeübergang auf die Werkstücke 6, 7 beeinflusst.

Im Inneren des Heizelements 12 sind schraffiert dargestellte elektrische Widerstandsheizelemente 13 angeordnet, die zum Einbringen von Wärme in das Heizelement 12 dienen. Alternativ wäre es gleichermaßen denkbar, das Heizelement 12 mit inneren Kanälen auszugestalten und ein Heizfluid, beispielsweise Wasserdampf durch diese strömen zu lassen, um das Heizelement 12 zu erhitzen.

Das Heizelement 12 ist mit der Kolbenstange eines Hydraulikzylinders 14 verbunden, durch welchen es sich senkrecht zu der Bewegungsrichtung X der Werkstückaufnahmen 4, 5 zwischen der in Figur 1 dargestellten Heizposition und einer Warteposition, in welcher sich das Heizelement 12 außerhalb des Bereichs der Werkstückaufnahmen 4, 5 befindet, bewegen lässt. In der Heizposition erstreckt sich das Heizelement 12 in der Heizposition über die gesamte Querschnittsfläche der zu verbindenden Werkstücke 6, 7.

Die Heizelementstumpfschweißmaschine 1 umfasst ferner ein als Infrarot (IR)-Kamera 15 ausgebildetes thermographisches Aufzeichnungsgerät zur Erfassung der oberflächennahen Temperatur der Werkstücke 6, 7 in der Umgebung der Fügeflächen 10, 11. Im vorliegenden Fall erfasst die Infrarot-Kamera 15 einen Spektralbereich von 7,5 bis 13 µm mit einer Bildfrequenz von 120 Hz zum Schutz gegen das Eindringen von Staub und Feuchtigkeit. Ferner umfasst die Infrarot-Kamera 15 ein Schutzgehäuse 16 der Schutzklasse IP 67 zum Schutz gegen das Eindringen von Staub und Feuchtigkeit.

Die Infrarot-Kamera 15 ist mit einer nicht dargestellten Auswerteeinheit zur Ermittlung von Geometrieparametern einer Temperaturzone, in welcher eine zuvor festgelegte Temperatur überschritten wird, verbunden. Desweiteren umfasst die Heizelementstumpfschweißmaschine 1 eine ebenfalls nicht dargestellte Steuereinheit, welche mit der Auswerteeinheit verbunden ist und einen Sollwert einer Breite Bs der Temperaturzone mit einem von der Auswerteeinheit ermittelten Ist-Wert B abgleichen kann. Dabei ist die Steuereinheit als speicherprogrammierbare Steuerung ausgebildet und besitzt eine Eingabemöglichkeit für einen Temperatursollwert Ts, der für die Ermittlung der Temperaturzone relevant ist, und für einen Sollwert einer Breite Bs der Temperaturzone.

Sollen zwei Werkstücke 6, 7 mittels Heizelementstumpfschweißen gefügt werden, so ist zunächst eine Heizelementstumpfschweißmaschine 1 wie in Figur 1 dargestellt bereitzustellen. Im Anschluss wird das erste Werkstück 6 in die erste Werkstückaufnahme 4 eingesetzt, sowie das zweite Werkstück 7 in die zweite Werkstückaufnahme 5. Das Heizelement 12 wird nun entlang seiner Bewegungsrichtung Y in die in der Figur 1 dargestellten Heizposition gebracht, so dass es sich zwischen den Werkstückaufnahmen 4, 5 befindet und sich über die gesamte Querschnittsfläche der zu verbindenden Werkstücke 6, 7 erstreckt. Die in den Werkstückaufnahmen 4, 5 fixierten Werkstücke 6, 7 werden entlang der Bewegungsrichtung X gegen das Heizelement 12 gefahren, so dass die Fügeflächen 10, 11 flächig an dem plattenförmigen Heizelement 12 anliegen.

Zum Ausgleich von Unebenheiten der Fügeflächen findet zunächst eine Angleichphase statt, in der das erhitzte Heizelement 12 zwischen den Werkstücken 6, 7 positioniert ist und die Werkstücke 6, 7 durch die mit den Werkstückaufnahmen 4, 5 verbundenen Hydraulikzylinder mit einer Angleichkraft gegeneinander gedrückt werden.

Im Anschluss an die Angleichphase findet die Aufheizphase statt, in welcher das erhitzte Heizelement 12 zwischen den Werkstücken 6, 7 verbleibt und die Werkstücke 6, 7 mit einer definierten Aufheizkraft gegen das Heizelement 12 gedrückt werden. Die Aufheizkraft liegt dabei unterhalb der während der Angleichphase aufgebrachten Angleichkraft. Während der Aufheizphase wird durch die Infrarot-Kamera 15 der Temperaturverlauf in der Nähe der Fügeflächen 10, 11 kontinuierlich thermographisch erfasst. Die Auswerteeinheit ermittelt währenddessen auf Basis der durch die Infrarotkamera 15 erfassten Daten die sich senkrecht zu den Fügeflächen 10, 11 erstreckende Breite B einer Temperaturzone, in welcher die Werkstücktemperatur einen zuvor in die Steuerungseinheit eingegebenen Sollwert Ts überschreitet. Erreicht die von der Auswerteeinheit ermittelte Breite B des Temperaturbereichs einen ebenfalls zuvor in die Steuereinheit eingegebenen Sollwert Bs, werden die Werkstücke 6, 7 auseinander gefahren und das Heizelement 12 entlang der Bewegungsrichtung Y in seine Warteposition bewegt, um die Aufheizphase zu beenden.

Unmittelbar nach Herausfahren des Heizelements 12 in seine Warteposition findet die Fügephase statt, bei der die Werkstücke 6, 7 entlang der Bewegungsrichtung X zusammen gefahren und mit einer definierten Fügekraft an ihren Fügeflächen 10, 11 gegeneinander gedrückt werden.

Im vorliegenden Fall ist die Infrarot-Kamera 15 so ausgelegt, dass sie kontinuierlich eine Messfläche 17 erfasst. Grundsätzlich ist denkbar, dass die Auswerteeinheit ausgehend von den von der Infrarot-Kamera 15 erfassten Flächendaten der Temperatur eine durchschnittliche Breite B der Temperaturzone ermittelt, in welcher die Temperatur T oberhalb des in die Steuereinheit eingegebenen Temperatur-Sollwerts Ts liegt. Im vorliegenden Fall beschränkt sich jedoch die Auswerteeinheit auf die Ermittlung der Breite B der Temperaturzone entlang einer Messlinie Z ausgehend von der Fügefläche 10 des ersten Werkstücks 6, welche sich in Kontakt mit dem Heizelement 12 befindet. Im Bereich des Heizelements 12 ist die Werkstücktemperatur T am höchsten und fällt mit zunehmender Entfernung von der Fügefläche kontinuierlich ab.

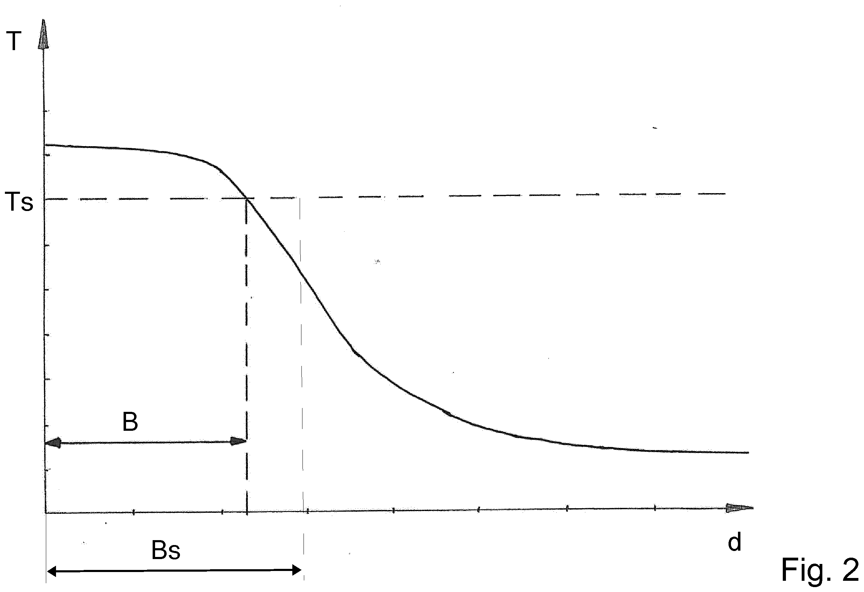

Das Diagramm in Figur 2 zeigt exemplarisch den Verlauf der Werkstücktemperatur T in Abhängigkeit vom Abstand d von der Fügefläche entlang der Messlinie Z. Als horizontale, gestrichelte Linie ist die Solltemperatur Ts eingetragen, die zuvor in die Steuereinheit eingegeben wurde. Die Auswerteeinheit ermittelt nun die Breite B, über welcher die Werkstücktemperatur T oberhalb der Solltemperatur Ts liegt. Die Aufheizphase wird dann beendet, wenn die Breite B einen ebenfalls zuvor in die Steuereinheit eingegebenen Sollwert Bs, im Diagramm als gestrichelte vertikale Linie dargestellt, erreicht.

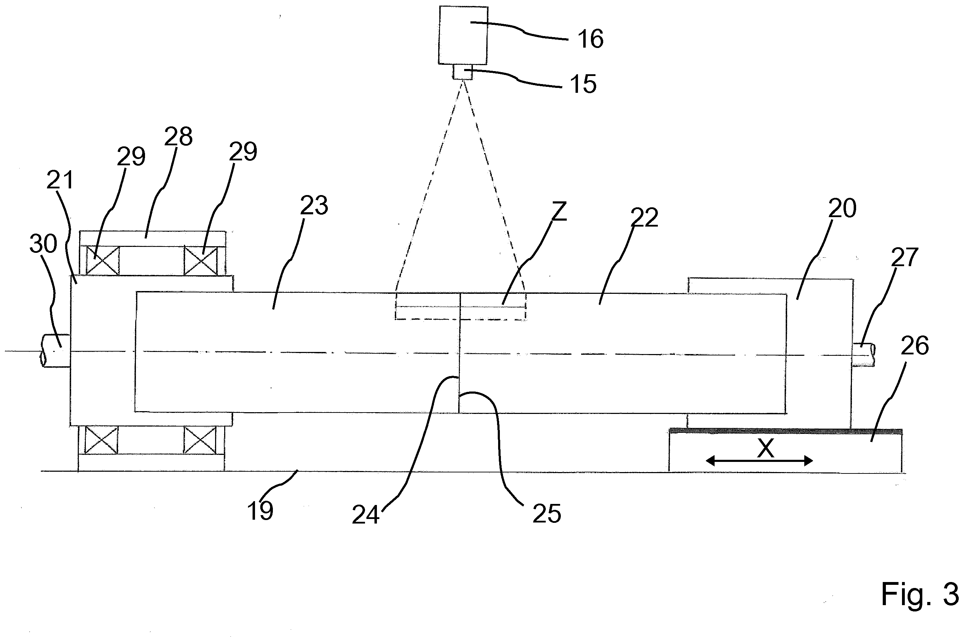

In Figur 3 ist eine als Reibschweißmaschine 18 ausgebildete Maschine zum thermischen Fügen von zwei Werkstücken gemäß der vorliegenden Erfindung dargestellt. Diese umfasst wie die in Figur 1 dargestellte Heizelementstumpfschweißmaschine 1 zwei auf einem Maschinengestell 19 angeordnete Werkstückaufnahmen 20, 21 zur Aufnahme von zwei Werkstücken 22, 23 mit im vorliegenden Fall rotationssymmetrischen Fügeflächen 24, 25. Eine Werkstückaufnahme 20 ist entlang einer Bewegungsrichtung X linear bewegbar auf einem an einem Maschinengestell 19 befestigten Schienensystem 26 angeordnet. Zum Bewegen der Werkstückaufnahme 20 auf dem Schienensystem 26 ist diese mit einer Kolbenstange 27 eines nicht dargestellten Hydraulikzylinders verbunden, dessen Gehäuse am Maschinengestell 19 befestigt ist.

Die andere Werkstückaufnahme 21 ist drehbar in einem Lagergehäuse 28 gelagert. Zur Lagerung sind im vorliegenden Fall zwei Wälzlager 29 vorgesehen, die im Hinblick auf die auftretenden Axialkräfte als angestellte Lagerung angeordnet sind. In an sich bekannter Weise kann es sich hier beispielsweise um Kegelrollenlager oder Schrägkugellager in X- oder O-Anordnung handeln. Das Lagergehäuse 28 ist ebenfalls am Maschinengestell 19 fixiert. Zum Aufbringen einer Rotationsbewegung ist die Werkstückaufnahme 21 drehfest mit einer Antriebswelle 30 verbunden, die über eine nicht dargestellte Antriebseinheit in eine Drehbewegung versetzt werden kann. Ortsfest außerhalb des Bewegungsbereichs der Werkstückaufnahme 20 ist eine Infrarot-Kamera 15 in einem Schutzgehäuse 16 angeordnet, die die gleichen Merkmale aufweist wie die in Figur 1 dargestellte Kamera. In gleicher Weise ist diese mit einer Auswerteeinheit verbunden, die geeignet ist, ausgehend von den durch die Infrarot-Kamera 15 erfassten Temperaturdaten, die sich senkrecht zu den Fügeflächen 24, 25 erstreckende Breite eines Temperaturbereichs ermitteln.

Die Reibschweißmaschine 18 umfasst ferner eine als speicherprogrammierbare Steuerung ausgebildete Steuereinheit, welche mit der Auswerteeinheit verbunden ist und geeignet ist, einen Sollwert einer Breite Bs mit dem von der Auswerteeinheit ermittelten Wert einer Breite B abzugleichen. Die Eingabe in die Steuereinheit erfolgt über ein berührungsempfindliches Display. Prinzipiell kann die Eingabe auch über eine Tastatur oder über Drehknöpfe erfolgen.

Sollen zwei Werkstücke, insbesondere Kunststoffwerkstücke, mittels der in Figur 3 dargestellten Reibschweißmaschine 18 gefügt werden, so werden zunächst die beiden Werkstücke 22, 23 in die korrespondierenden Werkstückaufnahmen 20, 21 eingesetzt und aneinander gefahren, so dass die Fügeflächen 24, 25 aneinander anliegen.

Im Anschluss wird eine Aufheizphase durchgeführt, in welcher die aneinander an den Fügeflächen 24, 25 anliegenden Werkstücke 22, 23 zum Erwärmen unter Einwirkung einer durch den Hydraulikkolben über die Kolbenstange 27 auf die Werkstückaufnahme 20 aufgebrachten Druckkraft relativ zueinander bewegt werden. Dabei wird der Temperaturverlauf der Werkstücke 22, 23 in der Nähe der Fügeflächen 24, 25 durch die Infrarot-Kamera 15 kontinuierlich thermographisch erfasst. Auf Basis der erfassten Daten ermittelt die Auswerteeinheit die Breite eines Temperaturbereichs, in welchem die Breite B eines Temperaturbereichs, in welchem die Werkstücktemperatur T einen zuvor in die Steuereinheit eingegebenen Sollwert Ts überschreitet. Erreicht die von der Auswerteeinheit ermittelte Breite des Temperaturbereichs B einen zuvor in die Steuereinheit eingegebenen Sollwert der Breite Bs, so wird die Aufheizphase beendet.

In der sich nun anschließenden Fügephase werden die Werkstücke 22, 23 mit einer definierten Fügekraft, die höher ist als die während der Aufheizphase wirkende Reibkraft, über einen definierten Zeitraum an ihren Fügeflächen 24, 25 gegeneinander gedrückt, wobei die Relativbewegung der Werkstücke 22, 23 zueinander zum Stillstand kommt.

Die Erfassung und Auswertung der Temperaturdaten erfolgt dabei in gleicher Weise wie im Zusammenhang mit den Figuren 1 und 2 beschrieben entlang einer Messlinie Z.

Dem Verfahren zum Heizelementstumpfschweißen und dem Verfahren zum Reibschweißen sind gemeinsam, dass die Beendigung der Aufheizphase nicht nach Ablauf einer vorgegebenen Dauer erfolgt, sondern in Abhängigkeit vom real gemessenen Temperaturverlauf auf den Werkstücken. Dadurch kann eine höhere Qualität der Fügeverbindung erzielt werden, insbesondere wenn Unregelmäßigkeiten im Werkstoff vorliegen, da diese durch die bei jedem Fügevorgang ablaufende Temperaturmessung individuell berücksichtigt werden können. Diese Vorgehensweise ist prinzipiell auch für andere Schweißverfahren geeignet, beispielsweise für das Warmgasschweißen, das Hochfrequenzschweißen oder das Ultraschallschweißen.

### Bezugszeichenliste

- 1: Heizelementstumpfschweißmaschine
- 2: Maschinengestell
- 3: Schienensystem
- 4: erste Werkstückaufnahme
- 5: zweite Werkstückaufnahme
- 6: erstes Werkstück
- 7: zweites Werkstück
- 8: Kolbenstange
- 9: Kolbenstange
- 10: Fügefläche des ersten Werkstücks
- 11: Fügefläche des zweiten Werkstücks
- 12: Heizelement
- 13: Widerstandsheizelemente
- 14: Hydraulikzylinder
- 15: Infrarot-Kamera
- 16: Schutzgehäuse
- 17: Messfläche
- 18: Reibschweißmaschine
- 19: Maschinengestell
- 20: erste Werkstückaufnahme
- 21: drehbar gelagerte zweite Werkstückaufnahme
- 22: erstes Werkstück
- 23: zweites Werkstück
- 24: Fügefläche des ersten Werkstücks
- 25: Fügefläche des zweiten Werkstücks
- 26: Schienensystem
- 27: Kolbenstange
- 28: Lagergehäuse
- 29: Wälzlager
- 30: Antriebswelle

- Bs: Sollwert der Breite des Temperaturbereichs
- B: Istwert der Breite des Temperaturbereichs
- Ts: Solltemperatur
- T: Isttemperatur
- X: Bewegungsrichtung der Werkstückaufnahmen relativ zueinander
- Y: Bewegungsrichtung des Heizelements
- Z: Messlinie

## Patentansprüche

1. Einrichtung (1, 18) zum thermischen Fügen von zwei Werkstücken (6, 7, 22, 23), insbesondere Kunststoffwerkstücken, an zueinander weisenden, insbesondere parallelen Fügeflächen (10, 11, 24, 25) im Stumpfstoß, mit
einer ersten Werkstückaufnahme (4, 20) zur Aufnahme eines ersten Werkstücks (6, 22) und
einer dieser gegenüberliegenden zweiten Werkstückaufnahme (5, 21) zur Aufnahme eines zweiten Werkstücks (7, 23),
wobei die beiden Werkstückaufnahmen (4, 5, 20, 21) relativ zueinander zum Zusammen- und Auseinanderbewegen der Werkstücke (6, 7, 22, 23) unter Definition einer Bewegungsrichtung (X) bewegbar sind und geeignet sind, zum Erwärmen und/oder Fügen der Werkstücke (6, 7, 22, 23) eine Druckkraft in Bewegungsrichtung aufzubringen,
**wobei,** die Einrichtung ferner
ein thermographisches Aufzeichnungsgerät (15) zur Erfassung der oberflächennahen Werkstücktemperatur in der Umgebung der Fügeflächen (10, 11, 24, 25) umfasst, **dadurch gekennzeichnet, dass** das thermographische Aufzeichnungsgerät (15) mit einer Auswerteeinheit zur Ermittlung von Geometrieparametern einer Temperaturzone, insbesondere einer Schmelzzone, vorzugsweise derer sich senkrecht zu den Fügeflächen (10, 11, 24, 25) erstreckenden Breite (B), ausgehend von den erfassten Temperaturdaten des Aufzeichnungsgeräts (15) verbunden ist.

2. Einrichtung (1, 18) nach Anspruch 1, **dadurch gekennzeichnet, dass** das thermographische Aufzeichnungsgerät (15) insbesondere ortsfest außerhalb des Bewegungsbereichs der Werkstückaufnahmen (4, 5, 20, 21) positioniert ist, und/oder dass es sich bei dem thermographischen Aufzeichnungsgerät (15) um eine Infrarot (IR)-Kamera insbesondere zur Erfassung eines Spektralbereichs von 7,5 bis 13 µm handelt, und/oder dass das thermographische Aufzeichnungsgerät (15) die Werkstücktemperatur mit einer Bildfrequenz zwischen 10 und 250 Hz, insbesondere zwischen 50 und 200 Hz und vorzugsweise zwischen 100 und 150 Hz erfasst, und/oder dass das thermographische Aufzeichnungsgerät ein Schutzgehäuse (16) der Schutzklasse IP 67 oder höher umfasst.

3. Einrichtung (1, 18) nach einem der vorherigen Ansprüche, **dadurch gekennzeichnet, dass** die Einrichtung ferner eine Steuereinheit zum Steuern des Schweißprozesses umfasst, welche mit der Auswerteeinheit verbunden ist und geeignet ist, einen Sollwert einer Größe, insbesondere der Breite (Bs) der Temperaturzone, vorzugsweise der Breite der Schmelzzone, mit einem von der Auswerteeinheit ermittelten Istwert (B) abzugleichen, wobei, insbesondere, die Steuereinheit als speicherprogrammierbare Steuerung ausgebildet ist und/oder eine Eingabemöglichkeit für einen Sollwert, bevorzugt für einen Sollwert einer Breite der Temperaturzone (Bs), besonders bevorzugt der Schmelzzone, und/oder einer Temperatur (Ts) umfasst.

4. Einrichtung (1, 18) nach einem der vorherigen Ansprüche, **dadurch gekennzeichnet, dass** mindestens eine Werkstückaufnahme (4, 5, 20, 21) bewegbar an einem Maschinengestell angeordnet ist, mittels eines elektrischen und/oder eines pneumatischen und/oder eines hydraulischen Linearantriebs an diesem linear bewegbar und bei zusammengeführten Werkstücken (6, 7, 22, 23) mit einer Druckkraft beaufschlagbar ist.

5. Einrichtung (1, 18) nach Anspruch 4, **dadurch gekennzeichnet, dass** die mindestens eine Werkstückaufnahme (4, 5, 20, 21) mit der Kolbenstange (8, 9, 27) eines hydraulisch oder pneumatisch wirkenden Zylinders verbunden ist und das Gehäuse des Zylinders an dem Maschinengestell (2, 19) befestigt ist, und/oder dass die mindestens eine Werkstückaufnahme (4, 5, 20) auf einem an dem Maschinengestell (2, 19) befestigten Führungssystem, insbesondere Schienensystem (3, 26) angeordnet ist.

6. Einrichtung (1, 18) nach einem der vorherigen Ansprüche, **dadurch gekennzeichnet, dass** diese einen oder mehrere Kraftsensoren zur Messung der auf die Werkstücke (6, 7, 22, 23) aufgebrachten Druckkräfte und/oder einen oder mehrere Wegsensoren zur Bestimmung der Position der Werkstückaufnahmen (4, 5, 20, 21) relativ zueinander aufweist.

7. Einrichtung (1) nach einem der vorherigen Ansprüche, **dadurch gekennzeichnet, dass** diese als Heizelementstumpfschweißmaschine (1) ausgebildet ist und ein Heizelement (12) zum Aufheizen der Werkstücke (6, 7) im Bereich ihrer Fügeflächen (10, 11) durch direkten Kontakt mit diesen aufweist, welches quer, insbesondere senkrecht zur Bewegungsrichtung (X) der Werkstückaufnahmen (4, 5) relativ zueinander zwischen einer Warteposition, in welcher sich das Heizelement (12) außerhalb des Bereichs der Werkstückaufnahmen (4, 5) befindet, und einer Heizposition, in der sich das Heizelement (12) zwischen den Werkstückaufnahmen (4, 5) befindet und sich über die gesamte Querschnittsfläche der zu verbindenden Werkstücke (6, 7) erstreckt, bewegbar ist, und wobei die Werkstücke (6, 7) mittels geeigneter Spanneinrichtungen fest in den Werkstückaufnahmen (4, 5) fixiert sind.

8. Einrichtung (1) nach Anspruch 7, **dadurch gekennzeichnet, dass** das Heizelement (12) plattenförmig ausgebildet ist, und/oder dass das Heizelement (12) überwiegend aus einem metallischen Werkstoff, insbesondere einem Stahlwerkstoff, vorzugsweise einem korrosionsbeständigen Edelstahl besteht und/oder eine Beschichtung aufweist, und/oder dass das Heizelement (12) mittels eines durch innere Kanäle strömenden Heizfluides oder mittels elektrischer Widerstandsheizelemente (13) beheizbar ist, und/oder dass jede der beiden Werkstückaufnahmen (4, 5) mindestens eine Spanneinrichtung zum Fixieren der Werkstücke (6, 7) aufweist.

9. Einrichtung (18) nach einem der Ansprüche 1 bis 6, **dadurch gekennzeichnet, dass** diese als Reibschweißmaschine (19) insbesondere zum Fügen von zwei Werkstücken (22, 23) mit rotationssymmetrischen Fügeflächen (24, 25) ausgebildet ist, wobei vorgesehen ist, die zum Fügen erforderliche Wärme durch relative Bewegung der beiden miteinander in Kontakt stehenden Werkstücke (22, 23) zueinander in den Fügebereich einzubringen.

10. Einrichtung (18) nach Anspruch 9, **dadurch gekennzeichnet, dass** die Werkstückaufnahmen (20, 21) relativ zueinander um die Bewegungsrichtung (X) der Werkstückaufnahmen (20, 21) drehbar ausgebildet sind, wobei, insbesondere, genau eine der beiden Werkstückaufnahmen (21) um die Bewegungsrichtung (X) der Werkstückaufnahmen (20, 21) drehbar gelagert ist und die Einrichtung (18) ferner eine Antriebseinheit umfasst, welche die drehbar gelagerte Werkstückaufnahme (21) in eine Drehbewegung versetzen kann, wobei, bevorzugt, die Einrichtung (18) ferner eine Schwungmasse umfasst, die drehfest mit der drehbaren Werkstückaufnahme (21) verbunden ist, und/oder eine der beiden Werkstückaufnahmen (21) bevorzugt linear unbeweglich angeordnet ist, wobei es sich dabei besonders bevorzugt um die drehbar gelagerte Werkstückaufnahme (21) handelt.

11. Verfahren zum Fügen von zwei Werkstücken (6, 7, 22, 23), insbesondere von Kunststoffwerkstücken, umfassend die folgenden Schritte:
Bereitstellen einer Einrichtung (1, 18) nach einem der vorherigen Ansprüche;
Einsetzen eines ersten Werkstücks (6, 22) in die erste Werkstückaufnahme (4, 20);
Einsetzen eines zweiten Werkstücks (7, 23) in die zweite Werkstückaufnahme (5, 21);
Durchführung einer Aufheizphase, in welcher
die Werkstücke (6, 7, 22, 23) im Bereich ihrer Fügeflächen (10, 11, 24, 25) aufgeheizt werden,
das Aufzeichnungsgerät (15) den Temperaturverlauf der Werkstücke (6, 7, 22, 23) in der Nähe der Fügeflächen (10, 11, 24, 25) kontinuierlich thermographisch erfasst,
die Auswerteeinheit auf Basis der erfassten Daten Geometrieparameter einer Temperaturzone ermittelt, in welcher die Werkstücktemperatur (T) einen Sollwert (Ts) überschreitet, und
bei Erreichen vorgegebener Geometrieparameter der Temperaturzone die Aufheizphase beendet wird;
Durchführung einer Fügephase, bei der die Werkstücke (6, 7, 22, 23) unter Einwirkung einer Fügekraft stoffschlüssig miteinander verbunden werden.

12. Verfahren nach Anspruch 11, **dadurch gekennzeichnet, dass** das Aufzeichnungsgerät (15) die Temperatur (T) der Werkstückoberflächen kontinuierlich über eine Fläche im Bereich der Fügeflächen (10, 11, 24, 25) erfasst, wobei, insbesondere, die Auswerteeinheit eine durchschnittliche Breite der Temperaturzone über eine Fläche errechnet und/oder die Auswerteeinheit eine Breite (B) der Temperaturzone ausgehend von einem Temperaturverlauf entlang einer sich quer, vorzugsweise sich senkrecht zu den Fügeflächen (10, 11, 24, 25) erstreckenden Meßlinie (Z) ermittelt, wobei, bevorzugt, die Aufheizphase beim Erreichen eines vorgegebenen Sollwerts der Breite (B_{S}) beendet wird.

13. Verfahren nach einem der Ansprüche 11 oder 12, **dadurch gekennzeichnet, dass** der Temperaturverlauf der Werkstücke (6, 7, 22, 23) des Weiteren während der Fügephase überwacht wird und bei Unterschreiten eines bestimmten Temperaturwertes die Fügephase beendet wird.

14. Verfahren nach einem der Ansprüche 11 bis 13, **dadurch gekennzeichnet, dass** es sich um ein Verfahren zum Heizelementstumpfschweißen handelt, zu dessen Durchführung eine Einrichtung (1) nach Anspruch 7 oder 8 bereitgestellt wird,
dass in der Aufheizphase das Heizelement (12) erhitzt und zwischen den Werkstücken (6, 7) positioniert wird und die Werkstücke (6, 7) mit einer definierten Aufheizkraft gegen das erhitzte Heizelement (12) gedrückt werden,
dass zur Beendigung der Aufheizphase die Werkstücke (6, 7) auseinandergefahren und das Heizelement (12) in die Warteposition bewegt werden, und dass in der Fügephase die Werkstücke (6, 7) zusammengefahren und unter Einwirkung einer Fügekraft für eine bestimmte Dauer gegeneinander gedrückt werden,
wobei, insbesondere, vor der Aufheizphase eine Angleichphase zur Beseitigung von Unebenheiten der Fügeflächen (10, 11) stattfindet, in der das Heizelement zwischen den Werkstücken (6, 7) positioniert ist und die Werkstücke (6, 7) mit einer Angleichkraft gegen das Heizelement (12) gedrückt werden, die vorzugsweise oberhalb der Aufheizkraft liegt.

15. Verfahren nach einem der Ansprüche 11 bis 13, **dadurch gekennzeichnet, dass** es sich um ein Verfahren zum Reibschweißen handelt, zu dessen Durchführung eine Einrichtung (18) nach Anspruch 9 oder 10 bereitgestellt wird,
dass in der Aufheizphase die an den Fügeflächen (24, 25) aneinander anliegenden Werkstücke (22, 23) zum Aufheizen unter Einwirkung einer definierten Reibkraft relativ zueinander bewegt werden,
dass in der Fügephase die Werkstücke (22, 23) mit einer definierten Fügekraft über einen bestimmten Zeitraum an ihren Fügeflächen (24, 25) gegeneinander gedrückt werden, wobei die Relativbewegung der Werkstücke (22, 23) zueinander zum Stillstand kommt, wobei, insbesondere, die während der Fügephase wirkende Fügekraft höher ist als die während der Aufheizphase wirkende Reibkraft.

## Claims

1. Device (1, 18) for the thermal joining of two workpieces (6, 7, 22, 23), in particular plastic workpieces, at mutually facing, in particular parallel joining surfaces (10, 11, 24, 25) in the butt joint, comprising
a first workpiece receptacle (4, 20) for receiving a first workpiece (6, 22) and
a second workpiece receptacle (5, 21), opposite the first, for receiving a second workpiece (7, 23),
wherein the two workpiece receptacles (4, 5, 20, 21) are movable relative to each other for moving the workpieces (6, 7, 22, 23) together and apart while defining a direction of movement (X) and are adapted to apply a compressive force in the direction of movement for heating and/or joining the workpieces (6, 7, 22, 23),
wherein, the apparatus further comprises
a thermographic recording device (15) for recording the near-surface workpiece temperature in the vicinity of the joining surfaces (10, 11, 24, 25), **characterized in that** the thermographic recording device (15) is equipped with an evaluation unit for determining geometrical parameters of a temperature zone, in particular a melting zone, preferably of the width (B) thereof extending perpendicular to the joining surfaces (10, 11, 24, 25), on the basis of the recorded temperature data of the recording device (15).

2. Device (1, 18) according to claim 1, **characterized in that** the thermographic recording device (15) is positioned in particular stationarily outside the range of movement of the workpiece holders (4, 5, 20, 21), and/or **in that** the thermographic recording device (15) is an infrared (IR) camera in particular for recording a spectral range of 7,5 to 13 µm, and/or that the thermographic recording device (15) records the workpiece temperature with an image frequency between 10 and 250 Hz, in particular between 50 and 200 Hz and preferably between 100 and 150 Hz, and/or that the thermographic recording device comprises a protective housing (16) of protection class IP 67 or higher.

3. Device (1, 18) according to one of the previous claims, **characterized in that** the device further comprises a control unit for controlling the welding process, which control unit is connected to the evaluation unit and is suitable for comparing a setpoint value of a variable, in particular the width (BS) of the temperature zone, preferably the width of the fusion zone, with an actual value (B) determined by the evaluation unit, wherein, in particular, the control unit is designed as a programmable logic controller and/or comprises an input facility for a setpoint value, preferably for a setpoint value of a width of the temperature zone (BS), particularly preferably of the melting zone, and/or of a temperature (TS).

4. Device (1, 18) according to one of the previous claims, **characterized in that** at least one workpiece holder (4, 5, 20, 21) is arranged movably on a machine frame, can be moved linearly thereon by means of an electric and/or a pneumatic and/or a hydraulic linear drive and can be subjected to a compressive force when workpieces (6, 7, 22, 23) are brought together.

5. Device (1, 18) according to claim 4, **characterized in that** the at least one workpiece holder (4, 5, 20, 21) is connected to the piston rod (8, 9, 27) of a hydraulically or pneumatically acting cylinder and the housing of the cylinder is fastened to the machine frame (2, 19), and/or **in that** the at least one workpiece holder (4, 5, 20) is arranged on a guide system, in particular a rail system (3, 26), fastened to the machine frame (2, 19).

6. Device (1, 18) according to one of the previous claims, **characterized in that** it has one or more force sensors for measuring the compressive forces applied to the workpieces (6, 7, 22, 23) and/or one or more displacement sensors for determining the position of the workpiece holders (4, 5, 20, 21) relative to one another.

7. Device (1) according to one of the previous claims, **characterized in that** it is designed as a heating element butt welding machine (1) and has a heating element (12) for heating the workpieces (6, 7) in the region of their joining surfaces (10, 11) by direct contact therewith, which heating element (12) is arranged transversely, in particular perpendicularly, to the direction of movement (X) of the workpiece holders (4, 5) relative to one another between a waiting position, in which the heating element (12) is located outside the region of the workpiece holders (4, 5), and a heating position in which the heating element (12) is located between the workpiece holders (4, 5) and extends over the entire cross-sectional area of the workpieces (6, 7) to be joined, and wherein the workpieces (6, 7) are fixed firmly in the workpiece holders (4, 5) by means of suitable clamping devices.

8. Device (1) according to claim 7, **characterized in that** the heating element (12) is plate-shaped, and/or **in that** the heating element (12) consists predominantly of a metallic material, in particular a steel material, preferably a corrosion-resistant stainless steel, and/or has a coating, and/or **in that** the heating element (12) can be heated by means of a heating fluid flowing through internal channels or by means of electrical resistance heating elements (13), and/or **in that** each of the two workpiece holders (4, 5) has at least one clamping device for fixing the workpieces (6, 7).

9. Device (18) according to one of claims 1 to 6, **characterized in that** it is designed as a friction welding machine (19), in particular for joining two workpieces (22, 23) with rotationally symmetrical joining surfaces (24, 25), it being provided that the heat required for joining is introduced into the joining region by relative movement of the two workpieces (22, 23) in contact with one another.

10. Device (18) according to claim 9, **characterized in that** the workpiece holders (20, 21) are designed to be rotatable relative to one another about the direction of movement (X) of the workpiece holders (20, 21), wherein, in particular, precisely one of the two workpiece holders (21) is mounted rotatably about the direction of movement (X) of the workpiece holders (20, 21), and the device (18) further comprises a drive unit which can set the rotatably mounted workpiece holder (21) in a rotary movement, wherein, preferably, the device (18) further comprises a flywheel mass which is connected in a rotationally fixed manner to the rotatable workpiece holder (21), and/or one of the two workpiece holders (21) is preferably arranged in a linearly immovable manner, wherein this is particularly preferably the rotatably mounted workpiece holder (21).

11. Method for joining two workpieces (6, 7, 22, 23), in particular plastic workpieces, comprising the following steps:
providing a device (1, 18) according to one of the previous claims;
inserting a first workpiece (6, 22) into the first workpiece receptacle (4, 20);
inserting a second workpiece (7, 23) into the second workpiece receptacle (5, 21);
carrying out a heating phase in which
the workpieces (6, 7, 22, 23) are heated in the region of their joining surfaces (10, 11, 24, 25),
the recording unit (15) continuously thermographically records the temperature profile of the workpieces (6, 7, 22, 23) in the vicinity of the joining surfaces (10, 11, 24, 25)
the evaluation unit determines geometry parameters of a temperature zone on the basis of the detected data, in which the workpiece temperature (T) exceeds a set value (TS), and
the heating phase is terminated when predetermined geometry parameters of the temperature zone are reached;
carrying out a joining phase in which the workpieces (6, 7, 22, 23) are joined to one another with a material bond under the action of a joining force.

12. Method according to claim 11, **characterized in that** the recording unit (15) records the temperature (T) of the workpiece surfaces continuously over an area in the region of the joining surfaces (10, 11, 24, 25), wherein, in particular, the evaluation unit calculates an average width of the temperature zone over an area and/or the evaluation unit determines a width (B) of the temperature zone on the basis of a temperature profile along a measuring line (Z) extending transversely, preferably perpendicularly, to the joining surfaces (10, 11, 24, 25), the heating phase preferably being terminated when a predetermined desired value of the width (BS) is reached.

13. Method according to one of the claims 11 or 12, **characterized in that** the temperature profile of the workpieces (6, 7, 22, 23) is further monitored during the joining phase and the joining phase is terminated when the temperature falls below a specific value.

14. Method according to one of claims 11 to 13, **characterized in that** it is a method for heated element butt welding, for the implementation of which a device (1) according to claim 7 or 8 is provided,
**in that**, in the heating phase, the heating element (12) is heated and positioned between the workpieces (6, 7) and the workpieces (6, 7) are pressed against the heated heating element (12) with a defined heating force,
**in that**, to end the heating phase, the workpieces (6, 7) are moved apart and the heating element (12) is moved into the waiting position, and
**in that**, in the joining phase, the workpieces (6, 7) are moved together and pressed against one another for a specific duration under the action of a joining force,
wherein, in particular, prior to the heating phase, an equalization phase for eliminating unevenness of the joining surfaces (10, 11) takes place, in which the heating element is positioned between the workpieces (6, 7) and the workpieces (6, 7) are pressed against the heating element (12) with an equalization force which is preferably above the heating force.

15. Method according to one of claims 11 to 13, **characterized in that** it is a method for friction welding, for the implementation of which a device (18) according to claim 9 or 10 is provided,
**in that**, in the heating phase, the workpieces (22, 23) bearing against one another at the joining surfaces (24, 25) are moved relative to one another for heating under the action of a defined frictional force,
**in that**, in the joining phase, the workpieces (22, 23) are pressed against one another at their joining surfaces (24, 25) with a defined joining force over a specific period of time, the relative movement of the workpieces (22, 23) with respect to one another coming to a standstill, the joining force acting during the joining phase, in particular, being higher than the frictional force acting during the heating phase.

## Revendications

1. Dispositif (1, 18) pour l'assemblage thermique de deux pièces (6, 7, 22, 23), en particulier des pièces en matière plastique, sur des surfaces d'assemblage (10, 11, 24, 25) tournées l'une vers l'autre, en particulier parallèles, en bout à bout, avec
un premier logement de pièce (4, 20) pour recevoir une première pièce (6, 22) et
un deuxième logement de pièce (5, 21) opposé à celui-ci pour recevoir une deuxième pièce (7, 23),
les deux logements de pièce (4, 5, 20, 21) étant mobiles l'un par rapport à l'autre pour rapprocher et éloigner les pièces (6, 7, 22, 23) en définissant une direction de mouvement (X) et étant aptes à appliquer une force de pression dans la direction de mouvement pour chauffer et/ou assembler les pièces (6, 7, 22, 23),
dans lequel, le dispositif comprend en outre
un appareil d'enregistrement thermographique (15) pour détecter la température de la pièce à proximité de la surface dans l'environnement des surfaces d'assemblage (10, 11, 24, 25), **caractérisé en ce que** l'appareil d'enregistrement thermographique (15) est équipé d'une unité d'évaluation pour déterminer les paramètres géométriques d'une zone de température, en particulier d'une zone de fusion, de préférence de sa largeur (B) s'étendant perpendiculairement aux surfaces d'assemblage (10, 11, 24, 25), à partir des données de température saisies par l'appareil d'enregistrement (15).

2. Dispositif (1, 18) selon la revendication **1,caractérisé en ce que** l'appareil d'enregistrement thermographique (15) est positionné en particulier de manière fixe en dehors de la zone de déplacement des supports de pièces (4, 5, 20, 21), et/ou **en ce que** l'appareil d'enregistrement thermographique (15) est une caméra infrarouge (IR), en particulier pour la saisie d'une plage spectrale de 7, 5 à 13 µm, et/ou **en ce que** l'appareil d'enregistrement thermographique (15) enregistre la température de la pièce avec une fréquence d'image comprise entre 10 et 250 Hz, en particulier entre 50 et 200 Hz et de préférence entre 100 et 150 Hz, et/ou **en ce que** l'appareil d'enregistrement thermographique comprend un boîtier de protection (16) de la classe de protection IP 67 ou supérieure.

3. Dispositif (1, 18) selon l'une des revendications précédentes, **caractérisé en ce que** le dispositif comprend en outre une unité de commande pour commander le processus de soudage, qui est reliée à l'unité d'évaluation et est apte à calculer une valeur de consigne d'une grandeur, en particulier la largeur (BS) de la zone de température, de préférence la largeur de la zone de fusion, avec une valeur réelle (B) déterminée par l'unité d'évaluation, dans laquelle, en particulier, l'unité de commande est conçue comme une commande programmable et/ou comprend une possibilité d'entrée pour une valeur de consigne, de préférence pour une valeur de consigne d'une largeur de la zone de température (BS), de préférence de la zone de fusion, et/ou d'une température (TS).

4. Dispositif (1, 18) selon l'une des revendications précédentes, **caractérisé en ce qu'**au moins un logement de pièce (4, 5, 20, 21) est disposé de manière mobile sur un bâti de machine, peut être déplacé linéairement sur celui-ci au moyen d'un entraînement linéaire électrique et/ou pneumatique et/ou hydraulique et peut être sollicité par une force de pression lorsque les pièces (6, 7, 22, 23) sont réunies.

5. Dispositif (1, 18) selon la revendication 4, **caractérisé en ce que** l'au moins un logement de pièce (4, 5, 20, 21) est relié à la tige de piston (8, 9, 27) d'un vérin à action hydraulique ou pneumatique et le boîtier du vérin est fixé au bâti de machine (2, 19), et/ou **en ce que** l'au moins un logement de pièce (4, 5, 20) est disposé sur un système de guidage, en particulier un système de rails (3, 26), fixé au bâti de machine (2, 19).

6. Dispositif (1, 18) selon l'une des revendications précédentes, **caractérisé en ce qu'**il comporte un ou plusieurs capteurs de force pour mesurer les forces de pression exercées sur les pièces (6, 7, 22, 23) et/ou un ou plusieurs capteurs de déplacement pour déterminer la position des logements de pièces (4, 5, 20, 21) les uns par rapport aux autres.

7. Dispositif (1) selon l'une des revendications précédentes, **caractérisé en ce qu'**il est conçu comme une machine de soudage bout à bout à élément chauffant (1) et présente un élément chauffant (12) pour chauffer les pièces (6, 7) dans la zone de leurs surfaces d'assemblage (10, 11) par contact direct avec celles-ci, lequel élément chauffant est placé transversalement, en particulier perpendiculairement à la direction de déplacement (X) des logements de pièces (4, 5) les uns par rapport aux autres, entre une position d'attente, dans laquelle l'élément chauffant (12) se trouve à l'extérieur de la zone des logements de pièces (4, 5), et une position de chauffage dans laquelle l'élément chauffant (12) se trouve entre les logements de pièces (4, 5) et s'étend sur toute la surface de la section transversale des pièces (6, 7) à assembler, et dans laquelle les pièces (6, 7) sont fixées fermement dans les logements de pièces (4, 5) au moyen de dispositifs de serrage appropriés.

8. Dispositif (1) selon la revendication 7, **caractérisé en ce que** l'élément chauffant (12) est réalisé en forme de plaque, et/ou **en ce que** l'élément chauffant (12) est principalement constitué d'un matériau métallique, en particulier d'un matériau en acier, de préférence d'un acier inoxydable résistant à la corrosion, et/ou présente un revêtement, et/ou **en ce que** l'élément chauffant (12) peut être chauffé au moyen d'un fluide chauffant circulant dans des canaux intérieurs ou au moyen d'éléments chauffants à résistance électrique (13), et/ou **en ce que** chacun des deux logements de pièces (4, 5) présente au moins un dispositif de serrage pour fixer les pièces (6, 7).

9. Dispositif (18) selon l'une des revendications 1 à 6, **caractérisé en ce qu'**il est conçu comme une machine de soudage par friction (19), en particulier pour l'assemblage de deux pièces (22, 23) avec des surfaces d'assemblage (24, 25) à symétrie de révolution, dans lequel il est prévu d'apporter la chaleur nécessaire à l'assemblage dans la zone d'assemblage par un mouvement relatif des deux pièces (22, 23) en contact l'une avec l'autre.

10. Dispositif (18) selon la revendication 9, **caractérisé en ce que** les logements de pièce (20, 21) sont réalisés de manière à pouvoir tourner l'un par rapport à l'autre autour de la direction de déplacement (X) des logements de pièce (20, 21), dans lequel, en particulier, exactement l'un des deux logements de pièce (21) est logé de manière à pouvoir tourner autour de la direction de déplacement (X) des logements de pièce (20, 21) et le dispositif (18) comprend en outre une unité d'entraînement, qui peut mettre en mouvement de rotation le logement de pièce (21) logé de manière rotative, de préférence le dispositif (18) comprenant en outre une masse d'inertie qui est reliée de manière solidaire en rotation au logement de pièce (21) rotatif, et/ou l'un des deux logements de pièce (21) étant disposé de préférence de manière linéairement immobile, il s'agit ici de manière particulièrement préférée du logement de pièce (21) logé de manière rotative.

11. Procédé d'assemblage de deux pièces (6, 7, 22, 23), en particulier de pièces en matière plastique, comprenant les étapes suivantes :
mise à disposition d'un dispositif (1, 18) selon l'une des revendications précédentes ;
insertion d'une première pièce à usiner (6, 22) dans le premier réceptacle de pièces à usiner (4, 20) ;
insertion d'une deuxième pièce à usiner (7, 23) dans le deuxième logement de pièce à usiner (5, 21) ;
réalisation d'une phase de chauffage au cours de laquelle
les pièces (6, 7, 22, 23) sont chauffées dans la zone de leurs surfaces d'assemblage (10, 11, 24, 25),
l'appareil d'enregistrement (15) enregistre en continu par thermographie l'évolution de la température des pièces (6, 7, 22, 23) à proximité des surfaces d'assemblage (10, 11, 24, 25),
l'unité d'évaluation détermine, sur la base des données saisies, des paramètres géométriques d'une zone de température dans laquelle la température de la pièce (T) dépasse une valeur de consigne (TS), et
lorsque les paramètres géométriques prédéfinis de la zone de température sont atteints, la phase de chauffage est terminée ;
réalisation d'une phase d'assemblage, au cours de laquelle les pièces à usiner (6, 7, 22, 23) sont assemblées entre elles par liaison de matière sous l'effet d'une force d'assemblage.

12. Procédé selon la revendication 11, **caractérisé en ce que** l'appareil d'enregistrement (15) détecte la température (T) des surfaces des pièces en continu sur une surface dans la zone des surfaces d'assemblage (10, 11, 24, 25), où, en particulier, l'unité d'évaluation calcule une largeur moyenne de la zone de température sur une surface et/ou l'unité d'évaluation détermine une largeur (B) de la zone de température à partir d'une courbe de température le long d'une ligne de mesure (Z) s'étendant transversalement, de préférence perpendiculairement aux surfaces d'assemblage (10, 11, 24, 25), la phase de chauffage étant de préférence terminée lorsqu'une valeur de consigne prédéfinie de la largeur (BS) est atteinte.

13. Procédé selon l'une des revendications 11 ou 12, **caractérisé en ce que** l'évolution de la température des pièces (6, 7, 22, 23) est en outre surveillée pendant la phase d'assemblage et que la phase d'assemblage est terminée lorsque la température est inférieure à une valeur déterminée.

14. Procédé selon l'une quelconque des revendications 11 à 13, **caractérisé en ce qu'**il s'agit d'un procédé de soudage bout-à-bout par élément chauffant pour la mise en œuvre duquel un dispositif (1) selon la revendication 7 ou 8 est mis à disposition,
**en ce que**, pendant la phase de chauffage, l'élément chauffant (12) est chauffé et positionné entre les pièces à usiner (6, 7) et les pièces à usiner (6, 7) sont pressées contre l'élément chauffant chauffé (12) avec une force de chauffage définie,
**en ce que**, pour terminer la phase de chauffage, les pièces (6, 7) sont écartées l'une de l'autre et l'élément chauffant (12) est déplacé dans la position d'attente, et
**en ce que**, dans la phase d'assemblage, les pièces (6, 7) sont rapprochées et pressées l'une contre l'autre pendant une durée déterminée sous l'effet d'une force d'assemblage,
dans lequel, en particulier, avant la phase de chauffage, a lieu une phase d'égalisation pour éliminer les inégalités des surfaces d'assemblage (10, 11), dans laquelle l'élément chauffant est positionné entre les pièces (6, 7) et les pièces (6, 7) sont pressées contre l'élément chauffant (12) avec une force d'égalisation qui est de préférence supérieure à la force de chauffage.

15. Procédé selon l'une des revendications 11 à 13, **caractérisé en ce qu'**il s'agit d'un procédé de soudage par friction pour la mise en œuvre duquel un dispositif (18) selon la revendication 9 ou 10 est mis à disposition,
**en ce que**, pendant la phase de chauffage, les pièces (22, 23) placées l'une contre l'autre sur les surfaces d'assemblage (24, 25) sont déplacées l'une par rapport à l'autre pour le chauffage sous l'effet d'une force de frottement définie,
**en ce que**, dans la phase d'assemblage, les pièces (22, 23) sont pressées l'une contre l'autre sur leurs surfaces d'assemblage (24, 25) avec une force d'assemblage définie pendant une durée déterminée, le mouvement relatif des pièces (22, 23) l'une par rapport à l'autre s'arrêtant, la force d'assemblage agissant pendant la phase d'assemblage étant, en particulier, supérieure à la force de frottement agissant pendant la phase de chauffage.
